# EUROPEAN PATENT APPLICATION

(11) **EP 4 825 890 A1**
(43) Date of publication of application: **21.10.2026**
(21) Application number: 25171142.0
(22) Date of filing: 17.04.2025
(51) Int. Cl.: C08G 18/10, C08G 18/32, C08G 18/42, C08G 18/48, C08G 18/71, C08G 18/72, C08G 18/73, C08G 18/75, C08G 18/77, C08G 18/79

(54) **TWO-PART OR MULTIPLE-PART POLYURETHANE ADHESIVE COMPOSITION FOR FILM LAMINATION**

(71) Applicant: Henkel AG & Co. KGaA, 40589 Düsseldorf (DE)
(72) Inventor: Franken, Marcel, 53819 Neunkirchen-Seelscheid (DE); Jungholt, Nina, 47661 Issum (DE); Meyer, Daniela, 50171 Kerpen (DE); Fothen, Christian, 41464 Neuss (DE)

(57) **Abstract**

The present invention relates to a two-part or multiple-part polyurethane adhesive composition for film lamination, in particular in food flexible packaging. Further, the present invention relates to method of manufacturing a laminate by using the two-part or multiple-part polyurethane adhesive composition and the laminate obtainable by the described method.

## Description

### Technical Fields

The present invention relates to a two-part or multiple-part polyurethane adhesive composition for film lamination, in particular in food flexible packaging. Further, the present invention relates to method of manufacturing a laminate by using the two-part or multiple-part polyurethane adhesive composition and the laminate obtainable by the described method.

### Background

Food flexible packaging material is prepared by laminating two or more layers of film. Each layer of the flexible packaging material is bonded to the adjacent layer by an adhesive. Adhesive can be applied to the layer from a solution in a suitable solvent using gravure or smooth roll coating cylinders or from a solvent-free state using special application machinery and that layer is laminated to another layer.

Although there are many possible types of adhesives, polyurethane based adhesives are preferred for use in flexible packaging materials because of their many desirable properties including good adhesion to the materials in each layer, high bonding strength, resistance to heat such as from heat sealing or retorting, and resistance to chemically aggressive products. Typically, an isocyanate-containing polyurethane prepolymer obtained by the reaction of excess diisocyanate with a polyether and/or polyester containing two or more active hydrogen groups per molecule is used in combination with a second part. The second part is usually a polyether polyol and/or a polyester polyol. The two parts are combined just before use and in a predetermined ratio and applied on one of the film surfaces and the coated film is laminated to another substrate.

Aliphatic or alicyclic polyisocyanates have been used in the adhesive compositions for food packaging, due to the concern on the migration issue of primary aromatic amines out of the food packaging into the packaged goods in quantities that are harmful to health when aromatic polyisocyanates such as methylenediphenyl diisocyanate (MDI) are used. However, polyurethane adhesive systems based on aliphatic or alicyclic polyisocyanates generally have low initial tack to film substrates. When the laminated packaging material having such adhesive system is accumulated in rolls and the rolls are kept in storage for a predetermined amount of time to allow the adhesive to cure before use in some applications, the so-called telescoping issue may occur due to the low initial tack of the adhesive to the film substrate. Telescoping is a process by which a roll of plastic film, initially cylindrical in shape, encounters an imbalance of forces causing the core and inner film layers to slide to one side or the other relative to the outer layers. This is also known as "coning," since the film roll takes on a shape resembling a telescope or cone, with the core and innermost film layers representing the apex of the cone. It will cause problems on food packaging manufacturing lines where the rolls are unwound.

As such, there is a strong need to develop an adhesive composition based on aliphatic or alicyclic polyisocyanates and having sufficient initial tack for the manufacturing of food flexible packaging while maintaining other adhesive properties such as good bonding strength.

### Summary of the invention

A first object of the invention is to provide a two-part or multiple-part polyurethane adhesive composition and its cured product. The adhesive composition comprises a polyol part and an isocyanate part, in which the isocyanate part comprises an alkoxysilane functionalized isocyanate compound and an isocyanate terminated urethane prepolymer being a reaction product of a reaction mixture comprising an isocyanate component comprising an aliphatic or alicyclic polyisocyanate (a) and a polyol component comprising an alicyclic polyol.

Another object of the invention is to provide a laminated flexible packaging material comprising the cured adhesive and the manufacturing method thereof.

### Brief description of the drawing

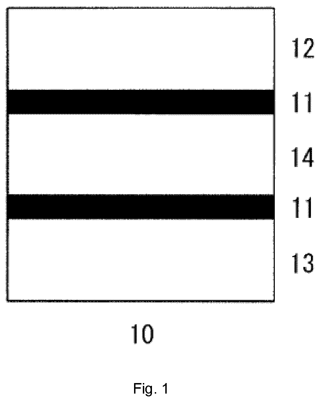

Figure 1 shows a sectional view of a food packaging film according to the present invention.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

Unless otherwise defined, all terms used in the disclosing the invention, including technical and scientific terms, have the meaning as commonly understood by one of the ordinary skill in the art to which this invention belongs to. By means of further guidance, term definitions are included to better appreciate the teaching of the present invention.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or process steps.

The recitation of numerical end points includes all numbers and fractions subsumed within the respective ranges, as well as the recited end points.

All references cited in the present specification are hereby incorporated by reference in their entirety.

If reference is made herein to a molecular weight of a polymer, this reference refers to the average number weight Mₙ, unless stated otherwise. The number average molecular weight Mₙ of a polymer can, for example, be determined by gel permeation chromatography (GPC) according to DIN 55674 with THF as the eluent. If not stated otherwise, all given molecular weights are those determined by GPC, calibrated with polystyrene standards. The average molecular weight M_{w} can also be determined by GPC, as described for Mₙ.

The disclosed two-part or multiple-part polyurethane adhesive composition comprises a polyol part and an isocyanate part. The isocyanate part comprises an alkoxysilane functionalized isocyanate compound and an isocyanate terminated urethane prepolymer being a reaction product of a reaction mixture comprising an isocyanate component comprising an aliphatic or alicyclic polyisocyanate (a), and a polyol component comprising an alicyclic polyol. The polyol part and the isocyanate part are stored separately and mixed in a predetermined ratio just before use.

### Polyol part

The polyol part of the adhesive composition according to the present invention comprises or consists of a polymeric polyol having an average hydroxyl functionality from at least 1.8, preferably from 1.8 to 6.0, more preferably from 1.8 to 4.0.

As used in this specification, the terms "polymer" and "polymeric" means prepolymers, oligomers, and both homopolymers and copolymers. As used in this specification, "prepolymer" means a polymer precursor capable of further reactions or polymerization by one or more reactive groups to form a higher molecular mass or cross-linked state. As used in this specification, the prefix "poly" refers to two or more. A polyol is understood to be a compound containing more than one hydroxyl (-OH) group in the molecule. A polyol can further have other functionalities on the molecule. The term "polyol" encompasses a single polyol or a mixture of two or more polyols. The average hydroxyl (-OH) functionality refers to the average number of reactive hydroxyl groups contained in one molecule of polyol.

The polymeric polyol may have a weight average molecular weight of from 400 to 10000 g/mol. "Molecular weight" herein refers to weight average molecular weight unless otherwise specified. The number average molecular weight Mn, as well as the weight average molecular weight Mw, is determined according to the present invention by gel permeation chromatography (GPC, also known as SEC) at 23°C using a styrene standard according to DIN EN ISO 16014-5:2012-10.

The polymeric polyol may also have a hydroxyl value from 10 to 500 mg KOH/g, preferably from 20 to 400 mg KOH/g, and more preferably from 50 to 350 mg KOH/g, measured according to DIN EN ISO 4629.

In the present invention, the polymeric polyol may have a glass transition temperature of -20°C to 100°C. The glass transition temperature of the polyester polyol is measured using a differential scanning calorimeter. With respect to a proper amount of a sample, a DSC curve was measured at a temperature rise rate of 10°C/minute and the temperature of an inflection point of the obtained DSC curve was regarded as the glass transition temperature.

In the present invention, the polymeric polyol appears in liquid form at room temperature. Such the polymeric polyol can provide ease for further processing in formulating the adhesive composition.

Some suitable polymeric polyols include the reaction products of low molecular weight polyhydric alcohols with alkylene oxides, so-called polyether polyols. The alkylene oxides preferably contain 2 to 4 carbon atoms. Some reaction products of this type include, for example, the reaction products of ethylene glycol, propylene glycol, the isomeric butane diols, hexane diols or 4,4'-dihydroxydiphenyl propane with ethylene oxide, propylene oxide or butylene oxide or mixtures of two or more thereof. The reaction products of polyhydric alcohols, such as glycerol, trimethylol ethane or trimethylol propane, pentaerythritol or sugar alcohols or mixtures of two or more thereof, with the alkylene oxides mentioned to form polyether polyols are also suitable. Thus, depending on the desired molecular weight, products of the addition of only a few mol ethylene oxide and/or propylene oxide per mol or of more than one hundred mol ethylene oxide and/or propylene oxide onto low molecular weight polyhydric alcohols may be used. Other polyether polyols are obtainable by condensation of, for example, glycerol or pentaerythritol with elimination of water. Some suitable polyols include those polyols obtainable by polymerization of tetrahydrofuran.

The polyether polyols are reacted in known manner by reacting the starting compound containing a reactive hydrogen atom with alkylene oxides, for example ethylene oxide, propylene oxide, butylene oxide, styrene oxide, tetrahydrofuran or epichlorohydrin or mixtures of two or more thereof.

Suitable starting compounds are, for example, water, ethylene glycol, 1,2- or 1,3-propylene glycol, 1,4- or 1,3-butylene glycol, hexane-1,6-diol, octane-1,8-diol, neopentyl glycol, 1,4-hydroxymethyl cyclohexane, 2-methyl propane-1,3-diol, glycerol, trimethylol propane, hexane-1,2,6-triol, butane-1,2,4-triol, trimethylol ethane, pentaerythritol, mannitol, sorbitol, methyl glycosides, sugars, phenol, isononylphenol, resorcinol, hydroquinone, 1,2,2- or 1,1,2-tris-(hydroxyphenyl)-ethane, ammonia, methyl amine, ethylenediamine, tetra- or hexamethylenediamine, triethanolamine, aniline, phenylenediamine, 2,4- and 2,6-diaminotoluene and polyphenylpolymethylene polyamines, which may be obtained by aniline/formaldehyde condensation, or mixtures of two or more thereof.

Some suitable polymeric polyols include diol EO/PO (ethylene oxide/propylene oxide) block copolymers, EO-tipped polypropylene glycols, or alkoxylated bisphenol A.

Some suitable polymeric polyols include polyether polyols modified by vinyl polymers. These polyols can be obtained, for example, by polymerizing styrene or acrylonitrile or mixtures thereof in the presence of polyether polyol.

Commercial examples of polyether polyol include Arcol series polyols such as Arcol PPG 425, Arcol PPG 1000 from Covestro, Dianol series polyols such as Dianol 330 from Arkema and Pluracol series polyols such as P-2010 from BASF.

Some suitable polymeric polyols include polyester polyols. For example, it is possible to use polyester polyols obtained by reacting low molecular weight alcohols, more particularly ethylene glycol, diethylene glycol, neopentyl glycol, hexanediol, butanediol, propylene glycol, glycerol or trimethylol propane, with caprolactone. Other suitable polyhydric alcohols for the production of polyester polyols are 1,4-hydroxymethylcyclohexane, 2-methylpropane-1,3-diol, butane-1,2,4-triol, triethylene glycol, tetraethylene glycol, polyethylene glycol, dipropylene glycol, polypropylene glycol, dibutylene glycol and polybutylene glycol.

Some suitable polymeric polyols include polyester polyols obtained by polycondensation. Thus, dihydric and/or trihydric alcohols may be condensed with less than the equivalent quantity of dicarboxylic acids and/or tricarboxylic acids or reactive derivatives thereof to form polyester polyols. Suitable dicarboxylic acids are, for example, adipic acid or succinic acid and higher homologs thereof containing up to 16 carbon atoms, unsaturated dicarboxylic acids, such as maleic acid or fumaric acid, cyclohexane dicarboxylic acid (CHDA), and aromatic dicarboxylic acids, more particularly the isomeric phthalic acids, such as phthalic acid, isophthalic acid or terephthalic acid. Citric acid and trimellitic acid, for example, are also suitable tricarboxylic acids. The acids mentioned may be used individually or as mixtures of two or more thereof. Polyester polyols of at least one of the dicarboxylic acids mentioned and glycerol which have a residual content of OH groups are suitable. Suitable alcohols include but are not limited to propylene glycol, butane diol, pentane diol, hexanediol, ethylene glycol, diethylene glycol, triethylene glycol, dipropylene glycol, tripropylene glycol, cyclohexanedimethanol (CHDM), 2-methyl-1,3-propanediol (MPDiol), or neopentyl glycol or isomers or derivatives or mixtures of two or more thereof. High molecular weight polyester polyols may be used in the second synthesis stage and include, for example, the reaction products of polyhydric, preferably dihydric, alcohols (optionally together with small quantities of trihydric alcohols) and polybasic, preferably dibasic, carboxylic acids. Instead of free polycarboxylic acids, the corresponding polycarboxylic anhydrides or corresponding polycarboxylic acid esters with alcohols preferably containing 1 to 3 carbon atoms may also be used (where possible). The polycarboxylic acids may be aliphatic, cycloaliphatic, aromatic or heterocyclic or both. They may optionally be substituted, for example by alkyl groups, alkenyl groups, ether groups or halogens. Suitable polycarboxylic acids are, for example, succinic acid, adipic acid, suberic acid, azelaic acid, sebacic acid, phthalic acid, isophthalic acid, terephthalic acid, trimellitic acid, phthalic anhydride, tetrahydrophthalic anhydride, hexahydrophthalic anhydride, tetrachlorophthalic anhydride, endomethylene tetrahydrophthalic anhydride, glutaric anhydride, maleic acid, maleic anhydride, fumaric acid, dimer fatty acid or trimer fatty acid or mixtures of two or more thereof. Small quantities of monofunctional fatty acids may optionally be present in the reaction mixture.

The polyester polyol may optionally contain a small number of terminal carboxyl groups. Polyesters obtainable from lactones, for example based on ε-caprolactone (also known as "polycaprolactones"), or hydroxycarboxylic acids, for example ω-hydroxycaproic acid, may also be used.

Polyester polyols of oleochemical origin may also be used. Oleochemical polyester polyols may be obtained, for example, by complete ring opening of epoxidized triglycerides of a fatty mixture containing at least partly olefinically unsaturated fatty acids with one or more alcohols containing 1 to 12 carbon atoms and subsequent partial transesterification of the triglyceride derivatives to form alkyl ester polyols with 1 to 12 carbon atoms in the alkyl group.

Commercial examples of polyester polyol include Baycoll series polyols such as Baycoll AD 2047, Baycoll AD 2055 from Coverstro, Lupraphen series polyols such as Lupraphen 1602 from BASF and Loctite Liofol LA series polyols such as Loctite Liofol LA 2798 and Loctite Liofol LA 7855 from Henkel.

Some suitable polymeric polyols include C36 dimer diols and derivatives thereof. Some suitable polymeric polyols include castor oil and derivatives thereof. Some suitable polymeric polyols include fatty polyols, for example the products of hydroxylation of unsaturated or polyunsaturated natural oils, the products of hydrogenations of unsaturated and polyunsaturated polyhydroxy natural oils, polyhydroxyl esters of alkyl hydroxyl fatty acids, polymerized natural oils, soybean polyols, and alkylhydroxylated amides of fatty acids. Some suitable polyols include the hydroxy functional polybutadienes (polybutadiene polyol, such as Krasol LBH 2000 from Cray Valley). Some suitable polymeric polyols include polyisobutylene polyols. Some suitable polymeric polyols include polyacetal polyols. Polyacetal polyols are understood to be compounds obtainable by reacting glycols, for example diethylene glycol or hexanediol or mixtures thereof, with formaldehyde. Polyacetal polyols may also be obtained by polymerizing cyclic acetals. Some suitable polymeric polyols include polycarbonate polyols. Polycarbonate polyols may be obtained, for example, by reacting diols, such as propylene glycol, butane-1,4-diol or hexane-1,6-diol, diethylene glycol, triethylene glycol or tetraethylene glycol or mixtures of two or more thereof, with diaryl carbonates, for example diphenyl carbonate, or phosgene. Some suitable polymeric polyols include polyamide polyols.

Some suitable polymeric polyols include polyacrylates containing OH groups. These polyacrylates may be obtained, for example, by polymerizing ethylenically unsaturated monomers bearing an OH group. Such monomers are obtainable, for example, by esterification of ethylenically unsaturated carboxylic acids and dihydric alcohols, the alcohol generally being present in a slight excess. Ethylenically unsaturated carboxylic acids suitable for this purpose are, for example, acrylic acid, methacrylic acid, crotonic acid or maleic acid. Corresponding OH-functional esters are, for example, 2-hydroxyethyl acrylate, 2-hydroxyethyl methacrylate, 2-hydroxypropyl acrylate, 2-hydroxypropyl methacrylate, 3-hydroxypropyl acrylate or 3-hydroxypropyl methacrylate or mixtures of two or more thereof.

In one embodiment, the polymeric polyol is selected from a polyether polyol, a polyester polyol, a polybutadiene polyol and the combination thereof. In one preferred embodiment, the polymeric polyol is polyester polyol.

If present, the at least one polymeric polyol is present in the polyol part in an amount from 50% to 95 wt% (% by weight), preferably from 60 to 90 wt%, based on the total weight of the polyol part.

### Isocyanate part

The isocyanate part in the adhesive composition according to the present invention comprises or consists of an alkoxysilane functionalized isocyanate compound and an isocyanate terminated urethane prepolymer based on aliphatic or alicyclic polyisocyanate (a), i.e. non-aromatic polyisocyanates. The isocyanate part is mixed with the polyol part so as to extend its chain length to obtain a polyurethane reaction product.

The isocyanate terminated urethane prepolymer is a reaction product of a reaction mixture comprising an isocyanate component and a polyol component. In particular, the isocyanate component comprises an aliphatic or alicyclic polyisocyanate (a) and the polyol component comprising at least 50% by weight of an alicyclic polyol based on the weight of the polyol component.

The aliphatic or alicyclic polyisocyanate (a) may be any one of an aliphatic polyisocyanate and an alicyclic polyisocyanate monomer and/or oligomer such as dimer or trimer as long as the objective adhesive of the present invention can be obtained.

As used herein, the "aliphatic polyisocyanate" means a monomer or oligomer which has a chain-like hydrocarbon chain to which an isocyanate group is directly bonded, and also has no cyclic hydrocarbon chain. The "aliphatic polyisocyanate" may have an aromatic ring, but the isocyanate group is not bonded directly to the aromatic ring. Furthermore, as used herein, the cyclic hydrocarbon chain does not contain aromatic rings.

The "alicyclic polyisocyanate" means a monomer or oligomer which has a cyclic hydrocarbon chain and may have a chain-like hydrocarbon chain. The isocyanate group may be directly bonded to the cyclic hydrocarbon chain or may be directly bonded to a chain-like hydrocarbon chain which may be present. Although the "alicyclic polyisocyanate" may have an aromatic ring, the isocyanate group is not directly bonded to the aromatic ring.

Therefore, for example, 4,4'-diphenylmethane diisocyanate corresponds to the aromatic polyisocyanate, since the isocyanate group is directly bonded to the aromatic ring. On the other hand, for example, xylylene diisocyanate corresponds to the aliphatic isocyanate, although it has an aromatic ring, since the isocyanate group is not directly bonded to the aromatic ring and is bonded to the methylene group. The aromatic ring may have a ring-fused structure in which two or more benzene rings are condensed.

Examples of the aliphatic polyisocyanate include 1,2-ethylene diisocyanate, 1,4-tetramethylene diisocyanate, 1,6-hexamethylene diisocyanate (HDI), 2,2,4(2,4,4)-trimethyl-1,6-hexamethylene diisocyanate (TMDI), 1,9-diisocyanato-5-methylnonane, 1,8-diisocyanato-2,4-dimethyloctane, 1,12-dodecane diisocyanate, ω,ω'-diisocyanatodipropyl ether, 3-isocyanatomethyl-3,5,5-trimethylcyclohexyl isocyanate (isophorone diisocyanate, IPDI), 1,4-diisocyanatomethyl-2,3,5,6-tetramethylcyclohexane, 2-methyl-1,5-diisocyanatopentane (MPDI), 2-ethyl-1,4-diisocyanatobutane, 1,10-diisocyanatodecane, 1,5-diisocyanatohexane, 1,3-diisocyanatomethylcyclohexane, 1,4-diisocyanatomethylcyclohexane, xylyl diisocyanate (XDI), tetramethylxylyl diisocyanate (TMXDI), methyl 2,6-diisocyanatohexanoate (lysine diisocyanate), and the dimer or trimer thereof, such as IPDI trimer and HDI trimer.

Examples of the alicyclic isocyanate include 5-isocyanato-1-isocyanatomethyl-1,3,3-trimethylcyclohexane (isophorone diisocyanate or IPDI), 1,3-bis(isocyanatomethyl)cyclohexane (hydrogenated xylylene diisocyanate or HXDI), bis(4-isocyanatocyclohexyl)methane (hydrogenated diphenylmethane diisocyanate or HMDI), 1,4-diisocyanatocyclohexane and the oligomer thereof.

The aliphatic or alicyclic polyisocyanate is also preferably a compound having 3 or more isocyanate groups. Such isocyanate-functionalized compound is preferably an adduct of various polyisocyanates with polyols such as 2-methylpentane-2,4-diol and trimethylolpropane, such as an adduct of diisocyanate such as HMDI, HDI, XDI, and IPDI with trimethylolpropane, and a trimer having an isocyanurate ring. As the polyisocyanate-modified product, a carbodiimide group, a uretdione group, a uretonimine group, a burette group reacted with water, a group of isocyanurate groups, or a modified product having two or more of these groups can be used.

In one embodiment, the aliphatic or alicyclic polyisocyanate (a) is selected from HMDI, IPDI, HDI, their adducts, their oligomers and the mixture of above. In one preferred embodiment, the aliphatic or alicyclic polyisocyanate is HMDI, IPDI, HDI, their oligomers and the mixture of above. In particular, the aliphatic or alicyclic polyisocyanate is IPDI, HDI or HMDI, or the combination of IPDI and HDI trimer or the combination of IPDI trimer and HDI trimer.

The polyol component reacts with the aliphatic or alicyclic polyisocyanate (a) and obtain the isocyanate terminated urethane prepolymer. The polyol component may comprise at least 50% by weight of an alicyclic polyol based on the weight of the polyol component, and thus the polyol component functions as a main monomer rather than a chain extender for the isocyanate terminated urethane prepolymer.

The polyol component may comprise at least 80% preferably at least 90%, and more preferably 100% by weight of the alicyclic polyol based on the weight of the polyol component.

The alicyclic polyol may have one, two or more rings and two or more hydroxy groups. Preferably, the alicyclic polyol is selected from 1,4-cyclohexanedimethanol, cyclobutanediol, cyclopentanediol, 1,4-cyclohexanediol, cycloheptanediol, cyclooctanediol, cyclohexanedimethanol, tricyclo[5.2.1.0.2.6]decanedimethanol, bicyclo[4.3.0]-nonanediol, dicyclohexanediol, tricyclo[5.3.1.1]dodecanediol, bicyclo[4.3.0]nonanedimethanol, tricyclo[5.3.1.1]dodecanediethanol, spiro[3.4]octanediol, butylcyclohexanediol, 1,1'-bicyclohexylidenediol, cyclohexanetriol, hydrogenated bisphenol A, 1,3-adamantanediol, and mixture thereof. More preferably, the alicyclic polyol is selected from 1,4-cyclohexanedimethanol, 1,4-cyclohexanediol, and mixture thereof. In particular, the alicyclic polyol is 1,4-cyclohexanedimethanol (CHDM).

Optionally, polyols other than alicyclic polyol such as polyether polyol, polyester polyol, short chain diol having no more than 10 carbon atoms may be contained in the polyol component for the isocyanate terminated urethane prepolymer. In view of providing a lower viscosity of the prepolymer, the polyol component comprises no more than 10% by weight, or no more than 5% by weight, or no more than 1% by weight of a polyether polyol, a polyester polyol, or a short chain diol. In one embodiment, the polyol component consists of one or more alicyclic polyols.

The components in the reaction mixture of the isocyanate terminated urethane prepolymer has an NCO/OH value, i.e. the molar ratio of NCO groups to OH groups in the reaction mixture, from 1.2 to 8, and preferably from 1.5 to 6.

The isocyanate terminated urethane prepolymer may be prepared both by a single-stage process and in a multistage process under the typical process conditions known to the expert for the production of isocyanate terminated prepolymers.

### Alkoxysilane functionalized isocyanate compound

According to the present invention, the isocyanate part further comprises an alkoxysilane functionalized isocyanate compound which functions as internal adhesion promoter.

The alkoxysilane functionalized isocyanate compound may be a reaction product of a reaction mixture comprising at least one aliphatic or alicyclic polyisocyanate (b) and at least one alkoxysilane having at least one isocyanate reactive group. The preparation of such alkoxysilane functionalized isocyanate compound is known in the art or can be prepared in accordance with EP 0158893 A1.

The aliphatic or alicyclic polyisocyanate (b) may be any one of an aliphatic isocyanate and an alicyclic isocyanate monomer and/or oligomer such as dimer or trimer, as described above for the aliphatic or alicyclic polyisocyanate (a), as long as the objective adhesive of the present invention can be obtained. The aliphatic or alicyclic polyisocyanate (b) may be the same or different to the aliphatic or alicyclic polyisocyanate (a) as described above.

In a preferred embodiment, the aliphatic or alicyclic polyisocyanate (b) is selected from IPDI, HDI, HMDI, their adducts, their oligomers and the mixture of above.

To form the alkoxysilane functionalized isocyanate compound, alkoxysilane compounds having at least one isocyanate reactive group are used to partially block the polyisocyanate. Preferably, the alkoxysilane compounds has no epoxide group so that the final adhesive product can be used for food packaging. Such alkoxysilane compounds having at least one isocyanate reactive group are known to the skilled person. Functional groups reactive toward isocyanate groups are, in particular, OH groups, thiol groups, carboxyl groups, primary and secondary amino groups, and mixtures thereof, preferably carboxyl groups, primary and secondary amino groups, and mixtures thereof, more preferably primary and secondary amino groups.

Examples of such alkoxysilane compounds which contain at least one primary and/or secondary amino group are 3-aminopropyltrimethoxysilane (APS), 3-aminopropyltriethoxysilane, 3-aminopropyltriisopropoxysilane, 2-aminoethyl-trimethoxysilane, 2-amino ethyltriethoxysilane, 2-aminoethyltriisopropoxysilane, aminomethyltrimethoxysilane, aminomethyltriethoxysilane, aminomethyl-triisopropoxysilane, 3-(2-aminoethyl)aminopropyltrimethoxysilane (AEAPS), 3-(2-aminoethyl)aminopropyltriethoxysilane, 3-(2-aminoethyl)aminopropyltriiso-propoxysilane, 2-(2-aminoethyl)aminoethyltrimethoxysilane, 2-(2-arninoethyl)-aminoethyltriethoxysilane, 2-(2-aminoethyl)aminoethyltriisopropoxysilane, 3-(3-aminopropyl)aminopropyltrimethoxysilane, 3-(3-aminopropyl)aminopropyl-triethoxysilane, 3-(3-aminopropyl)aminopropyltriisopropoxysilane, diethylene-triaminopropyltrimethoxysilane, diethylenetriaminopropyltriethoxysilane, N-(n-butyl)-3-aminopropyltrimethoxysilane, N-(n-butyl)-3-aminopropyltriethoxysilane, N-cyclohexylaminomethyltriethoxysilane, N-cyclohexylaminomethyltrimethoxysilane, N-ethyl-γ-aminoisobutyltrimethoxysilane, N-ethyl-γ-aminoisobutyltriethoxysilane, N-(vinylbenzyl)-2-aminoethyl-3-aminopropyltrimethoxysilane hydrochloride, N-phenyl-γ-aminopropyltrimethoxysilane, N-phenyl-γ-aminopropyltriethoxysilane, γ-ureidopropyltrimethoxysilane, γ-ureidopropyltriethoxysilane, N-methyl[3-(trimethoxysilyl)propyl]carbamate, and/or N-trimethoxysilylmethyl-O-methylcarbamate, and also bis[y-(triethoxysilyl)propyl]amine and bis[γ-(trimethoxysilyl)propyl]amine.

Examples of hydrolyzable silane compounds which contain at least one thiol group are 3-mercaptopropyltrimethoxysilane (MPTMS), 3-mercaptopropyltriethoxysilane, 3-mercaptopropyltriisopropoxysilane, 2-mercaptoethyltrimethoxysilane, 2-mercaptoethyltriethoxysilane and/or 2-mercaptoethyltriisopropoxysilane.

In one embodiment, bis[γ-(triethoxysilyl)propyl]amine and bis[γ-(trimethoxysilyl)propyl]amine are particularly preferred as the alkoxysilane compound.

The alkoxysilane functionalized isocyanate compound may be prepared by known method in the art or is available from Henkel under the name of BD 609 or BD 612.

According to the present invention, the isocyanate part may also comprise an aliphatic or alicyclic polyisocyanate (c), which may be same or different to aliphatic or alicyclic polyisocyanate (a) and/or (b).

In a preferred embodiment, the aliphatic or alicyclic polyisocyanate (c) is selected from IPDI, HDI, HMDI, their adducts, their oligomers and the mixture of above.

If present, the aliphatic or alicyclic polyisocyanate (c) is present in the isocyanate part in an amount from 10 to 70 wt%, preferably from 20 to 60 wt % based on the weight of the isocyanate part.

The isocyanate part usually has an NCO content of from 10 to 25 wt.% (determined according to Spielberger, DIN EN ISO 11909:2007-05), preferably 15 to 20 wt.%, and have an average NCO functionality of from 1 to 3.

According to the present invention, the ratio by weight of the polyol and isocyanate part is from 15:1 to 1:5, preferably is from 12:1 to 1:3, and more preferably from 10:1 to 2:1.

The adhesive composition according to the invention may further comprise additives. These additives may be used to affect the properties of the composition, for example the mechanical properties and thermal conductivity. Preferably the one or more additives are selected from the group consisting of additional filler, pigments, rheology modifiers, drying agents, flame retardants, curing agents, surface active agents and anti-foaming agents.

A catalyst can be used in the adhesive composition. When a catalyst is used, a crosslinking reaction between the hydroxyl groups and the isocyanate groups of the polyol and isocyanate parts is promoted. Examples of the catalyst include tertiary amine compounds and organometallic compounds.

Examples of the tertiary amine compound include triethylamine, triethylenediamine, N,N-dimethylbenzylamine, N-methylmorpholine, diazabicycloundecene (also known as DBU), and the like.

Examples of the organometallic compound include a tin compound and a non-tin compound.

Examples of the tin compound include dibutyltin dichloride, dibutyltin oxide, dibutyltin dibromide, dibutyltin dimaleate, dibutyltin dilaurate (also known as DBTDL), dibutyltin diacetate, dibutyltin sulfide, tributyltin sulfide, tributyltin oxide, Examples include tributyltin acetate, triethyltin ethoxide, tributyltin ethoxide, dioctyltin oxide, tributyltin chloride, tributyltin trichloroacetate, and tin 2-ethylhexanoate.

Examples of non-tin compounds include titanium compounds such as dibutyltitanium dichloride, tetrabutyltitanate, and butoxytitanium trichloride, lead compounds such as lead oleate, lead 2-ethylhexanoate, lead benzoate, and lead naphthenate. -Iron compounds such as iron ethylhexanoate and iron 2,4-pentadionate, cobalt compounds such as cobalt benzoate and cobalt 2-ethylhexanoate, zinc compounds such as zinc naphthenate and zinc 2-ethylhexanoate and zirconium naphthenate.

The adhesive composition according to the present invention may contain a solvent. Examples of organic solvents would include heterocyclic, aliphatic, or aromatic hydrocarbons such as toluene, isophorone, xylene, mono- or polyhydric alcohols such as ethylhexanol, butoxypropanol, isopropanol, butyl diglycol, methanol, ethanol, propanol, and butanol, ethers such as diethylene glycol dimethyl ether and dipropylene glycol methyl ether, ethyl glycol and butyl glycol, esters such as ethyl acetate, butyl acetate, pentyl acetate, or ethyl ethoxypropionate, ketones such as cyclohexanone, methyl ethyl ketone (MEK), methyl amyl ketone, methyl isobutyl ketone (MIBK), and acetone, and amides, such as N-methylpyrrolidone, N-ethylpyrrolidone, and dimethylformamide. In one preferred embodiment, the solvent is ethyl acetate.

In the embodiment of the present invention, the polyol part is preferably mixed in an amount of 50 to 95 parts by weight (in terms of solid content), more preferably 60 to 90 parts by weight, and most preferably 70 to 90 parts by weight, based on 100 parts by weight of the total weight of all components.

The adhesive composition according to the present invention may be in two-part form consisting of the polyol part and the isocyanate part as described above. A multiple-part adhesive composition may be selected depending on the actual use. For example, if an additive such as filler or diluent which is active to or incompatible with the polyol part and isocyanate part is used, it may be separated in a third part before mixing with the other parts for use.

The adhesive composition for food packaging films of the present invention can be produced by mixing the components and the optional additives in two parts or multiple parts. There is no particular limitation on the mixing method, as long as the objective adhesive for food packaging films of the present invention can be obtained. There is also no particular limitation on the order of mixing components. The adhesive composition for food packaging films according to the present invention can be produced without requiring a special mixing method and a special order of mixing. Thus, the obtained adhesive for food packaging films is excellent in both initial tack and long-term bonding strength.

In one preferred embodiment, the cured adhesive exhibited an initial tack of no less than 0.8 N/15mm, and preferably no less than 1 N/15mm according to DIN 53357 after dried at 80°C for 10 seconds.

In another preferred embodiment, the cured adhesive has a bonding strength of no less than 3 N/15mm, and preferably no less than 4 N/15mm according to DIN 53357 after stored at 40°C for 14 days.

In yet another preferred embodiment, the cured adhesive has a bonding strength of no less than 9 N/15mm, and preferably no less than 10 N/15mm according to DIN 53357 after stored at 40°C for 14 days and sterilized with oleic acid at 134°C for 45 min.

In another aspect, the present invention is directed to a flexible packaging material comprising a first layer comprised of a first polyolefin or first polyester; a second layer comprised of a second polyolefin, which may be the same or different from the first polyolefin, a second polyester, which may be the same as or different from the first polyester, or a metal foil; and cured adhesive of the present invention bonding the first layer to the second layer.

In yet another aspect, the present invention is directed to a method of making a flexible film laminate, comprising: combining the components of polyurethane adhesive system according to the present invention at a predetermined weight ratio to form an adhesive mixture; disposing the adhesive mixture on at least a portion of one surface of a first flexible film, joining the first flexible film and a second flexible film wherein the adhesive mixture is interposed between the first flexible film and the second flexible film; and curing the adhesive mixture.

The film or films to be coated and adhered to each other using the adhesive compositions may be comprised of any of the materials known in the art to be suitable for use in flexible packaging, including both polymeric and metallic materials as well as paper (including treated or coated paper). Thermoplastics are particularly preferred for use as at least one of the layers. The materials chosen for individual layers in a laminate are selected to achieve specific desired combinations of properties, e.g., mechanical strength, tear resistance, elongation, puncture resistance, flexibility/stiffness, gas and water vapor permeability, oil and grease permeability, heat sealability, adhesiveness, optical properties (e.g., clear, translucent, opaque), formability, merchantability and relative cost. Individual layers may be pure polymers or blends of different polymers. The polymeric layers are often formulated with colorants, anti-slip, anti-block, and anti-static processing aids, plasticizers, lubricants, fillers, stabilizers and the like to enhance certain layer characteristics.

Particularly preferred polymers for use include, but not limited to, polyethylene (including low density polyethylene (LDPE), medium density polyethylene (MDPE), high density polyethylene (HPDE), high molecular weight, high density polyethylene (HMW-HDPE), linear low density polyethylene (LLDPE), linear medium density polyethylene (LMPE)), polypropylene (PP), oriented polypropylene, polyesters such as poly (ethylene terephthalate) (PET) and poly (butylene terephthalate) (PBT), ethylene-vinyl acetate copolymers (EVA), ethylene-acrylic acid copolymers (EAA), ethylene-methyl methacrylate copolymers (EMA), ethylene-methacrylic acid salts (ionomers), hydrolyzed ethylene-vinyl acetate copolymers (EVOH), polyamides (nylon), polyvinyl chloride (PVC), poly(vinylidene chloride) copolymers (PVDC), polybutylene, ethylene-propylene copolymers, polycarbonates (PC), polystyrene (PS), styrene copolymers, high impact polystyrene (HIPS), acrylonitrile-butadienestyrene polymers (ABS), acrylonitrile copolymers (AN), polyamide (Nylon), polylactic acid (PLA), regenerated cellulose films (Cellophane).

The polymer surface may be treated or coated, if so desired. For example, a film of polymer may be metallized by depositing a thin metal vapor such as aluminium onto the film's surface. Metallization may enhance the barrier properties of the finished laminate. The polymer film surface may also be coated with anti-fog additive or the like or subjected to a pre-treatment with electrical or corona discharges, or ozone or other chemical agents to increase its adhesive receptivity. A coating of an inorganic oxide such as SiOx or AlOx may also be present on the polymer surface (for example, an SiOx- or AlOx-coated PET film).

One or more layers of the laminate may also comprise a metal film or foil, such as aluminium foil, or the like. The metal foil will preferably have a thickness of about 5 to 100 µm.

The individual films comprising the laminates can be prepared in widely varying thicknesses, for example, from about 5 to about 200 microns. The films, foils, and laminating adhesive composition can be assembled into the laminate by using any one or more of the several conventional procedures known in the art for such purpose. For instance, the adhesive formulation may be applied to the surface of one or both of two films/foils by means of extrusion, brushes, rollers, blades, spraying or the like and the film/foil surfaces bearing the adhesive composition brought together and passed through a set of rollers (often referred to as nip rollers) which press together the film/foils having the adhesive composition between the films/foils. The resulting laminate may be rolled or wound onto a reel for ageing. The adhesive may be applied by conventional techniques; e.g., a 3/4-roller coating mechanism in the case of the use of a solvent-free system, or a 2-roller coating mechanism in the case of the use of a solvent-containing system.

The coating weight at which the adhesive formulation can be applied to the surface of a film layer is in the range of about 1.0 to about 10 g/m², and more typically about 2.0 to about 6.0 g/m².

Generally speaking, the adhesive compositions are believed to be largely chemically cured through the reaction of the formulation constituents in the two parts containing isocyanate groups and the constituents containing hydroxyl or other active hydrogen groups. However, curing can also be accomplished at least in part through moisture curing. Although sufficient moisture may be inherently present on the film or foil surfaces for this purpose, water may also be deliberately introduced through conventional methods if so desired.

Laminates prepared in accordance with the present disclosure may be used for packaging purposes in the same manner as conventional or known flexible laminated packaging films. The laminates are particularly suitable for forming into flexible pouch-shaped container vessels capable of being filed with a foodstuff and sealed. For example, two rectangular or square sheets of the laminate may be piled in the desired configuration or arrangement; preferably, the two layers of the two sheets which face each other are capable of being heat-sealed to each other. Three peripheral portions of the piled assembly are then heat-sealed to form the pouch. Heat-sealing can easily be accomplished by means of a heating bar, heating knife, heating wire, impulse sealer, ultrasonic sealer, or induction heating sealer.

The foodstuff is thereafter packed in the so-formed pouch. If necessary, gasses injurious to the foodstuff such as air are removed by known means such as vacuum degasification, hot packing, boiling degasification, or steam jetting or vessel deformation. The pouch opening is then sealed using heat. The packed pouch may be heated at a later time.

An embodiment of the food packaging film according to the present invention is exemplified in FIG. 1, but the present invention is not limited to these embodiments. FIG. 1 shows a sectional view of a food packaging film 10. This food packaging film 10 is a laminate comprising one metal foil 14 and two plastic films 12 and 13, and the plastic films 12 and 13 are adhered on both sides of the metal foil 14 by using adhesive layers 11, respectively. More specifically, the plastic film 12 is preferably, for example, a polyethylene terephthalate (PET) film, the film 13 is preferably a polyolefin film, more preferably a PE film. The metal foil 14 is inserted between them. The metal foil 14 may be, for example, an aluminum foil. The film 12 is bonded to the metal foil 14, and the film 13 is bonded to the metal foil 14 by the adhesive layers 11 for food packaging films, respectively. Examples Of the film to be laminated include plastic films produced from polyethylene terephthalates, nylons, polyethylenes, polypropylenes, and polyvinyl chlorides; metal foils such as aluminum foil; deposited films such as metal deposited films and silica deposited films; metal films produced from stainless steel, steel, copper, and lead. Moreover, the thickness of the film to be laminated, for example, plastic film is preferably within a range of 5 to 200 µm.

The invention will be illustrated in more detail by way of the following examples which are not to be understood as limiting the concept of the invention.

### Examples

The following materials were used in the examples.

LA2798 is a polyester polyol obtained from Henkel.

1,4-Cyclohexanedimethanol (CHDM) was obtained from Eastman under the trade name of Eastman CHDM-D.

Ethylacetate was obtained from Brenntag.

Isophorone diisocyanate (IPDI) was obtained from Covestro under the trade name of Desmodur I.

IPDI trimer was obtained from Evonik under the trade name of Vestanat T1890.

1,6-hexamethylene diisocyanate (HDI) trimer was obtained from Covestro under the trade name of Desmodur N3300.

BD 609 is an alkoxysilane functionalized isocyanate compound obtained from Henkel.

PPG-1000 is a polypropylene glycol having a molecular weight of 1000 g/mol obtained from Covestro.

DEG is diethylene glycol obtained from Merck.

PES 218 is a polyester diol containing no alicyclic polyol structure, obtained from Henkel.

### Preparation of the isocyanate part

### Isocyanate part 1

In the first step, 9 g IPDI, 9 g HDI-trimer and 9 g ethylacetate were weighted into a flask and were heated to 40°C and stirred. 3 g CHDM was carefully added within 1 hour. The temperature was consistently measured and should not exceed 80°C, and cooling with water may be necessary. When the addition was completed, the mixture was stirred for additional 30 minutes to obtain an isocyanate terminated urethane prepolymer having NCO/OH ratio of 3.08 and NCO content of 12.11 as measured according to Spielberger, DIN EN ISO 11909:2007-05. Then 9.95 g ethyl acetate, 21.01 g HDI trimer, and 6.54 g BD 609 were added into 12.5 g isocyanate terminated urethane prepolymer to obtain the isocyanate part 1 having 13.32% NCO content as measured.

### Isocyanate part 2

In the first step, 10.02 g IPDI trimer, 3.65 g HDI-trimer and 6.72 g ethylacetate were weighted into a flask and were heated to 40°C and stirred. 0.92 g CHDM was carefully added within 1 hour. The temperature was consistently measured and should not exceed 80°C, and cooling with water may be necessary. When the addition was completed, the mixture was stirred for additional 30 minutes to obtain an isocyanate terminated urethane prepolymer having NCO/OH ratio of 5.3 and NCO content of 10.8% as measured. Then 3.21 g BD 609 was added into the isocyanate terminated urethane prepolymer to obtain the isocyanate part 2 having 10.4% NCO content as measured.

### Isocyanate part 3

In the first step, 3.65 g IPDI-trimer, 10.94 g HDI-trimer were weighted into a flask, and 6.72 g ethyl acetate as solvent and 3.21 g BD 609 were added. The mixture was stirred for 30 minutes to obtain the isocyanate part 3 having 13.44% NCO content as measured.

### Isocyanate part 4

Isocyanate part 4 is a mixture of aliphatic polyisocyanate and alkoxysilane functionalized isocyanate compound obtained from Henkel.

### Isocyanate part 5

Isocyanate part 5 is a mixture of alicyclic polyisocyanate containing no CHDM residue in its structure and alkoxysilane functionalized isocyanate compound obtained from Henkel.

### Isocyanate part 6

In the first step 11.25 g PPG-1000, 122.66 g HDI-trimer and 82.2 g ethylacetate were weighted into a flask and were heated to 40°C and stirred. The temperature was consistently measured and should not exceed 80°C, and cooling with water may be necessary. When the addition was completed, the mixture was stirred for additional 30 minutes to obtain an isocyanate terminated urethane prepolymer having NCO content of 12.96% as measured. Then 12.5 g BD 609 was added into the isocyanate terminated urethane prepolymer to obtain the isocyanate part 5 having 12.31% NCO content as measured. However, the isocyanate part showed a highly viscous liquid having a cup viscosity of 18 s (4 mm, 20°C), and thus is not suitable for lamination application.

### Isocyanate part 7

In the first step 5.63 g DEG, 128.28 g HDI-trimer and 82.2 g ethylacetate were weighted into a flask and were heated to 40°C and stirred. The temperature was consistently measured and should not exceed 80°C, and cooling with water may be necessary. When the addition was completed, the mixture was stirred for additional 30 minutes to obtain an isocyanate terminated urethane prepolymer having NCO content of 12.08% as measured. Then 39.25 g BD 609 was added into the isocyanate terminated urethane prepolymer to obtain the isocyanate part 7 having 11.54% NCO content as measured. However, the isocyanate part showed gel particles, and thus is not suitable for lamination application.

### Isocyanate part 8

In the first step 5.63 g PES 218, 128.28 g HDI-trimer and 82.2 g ethylacetate were weighted into a flask and were heated to 40°C and stirred. The temperature was consistently measured and should not exceed 80°C, and cooling with water may be necessary. When the addition was completed, the mixture was stirred for additional 30 minutes to obtain an isocyanate terminated urethane prepolymer having NCO content of 11.84% as measured. Then BD 609 was added into the isocyanate terminated urethane prepolymer to obtain the isocyanate part 8 having 11.34% NCO content as measured. However, the isocyanate part showed a highly viscous liquid having a cup viscosity of 19 s (4 mm, 20°C), and thus is not suitable for lamination application.

### Examples 1 to 2 (Ex. 1 to Ex. 2) and Comparative Examples 1 to 3 (CEx. 1 to CEx. 3)

Adhesive compositions for food packaging films of Examples 1 to 2 and Comparative Examples 1 to 3 were produced by mixing the polyester polyol as polyol part and isocyanate part according to the formulations in Table 1 in ethyl acetate.

**Table 1. Formulations of adhesive compositions (by weight parts)**

| Formulation | Ex. 1 | Ex. 2 | CEx. 1 | CEx. 2 | CEx. 3 |
|---|---|---|---|---|---|
| Polyol part | 4.5 | 4.5 | 6 | 4 | 4.5 |
| Isocyanate part 1 | 1 | - | - | - | - |
| Isocyanate part 2 | - | 1 | - | - | - |
| Isocyanate part 3 | - | - | - | - | 1 |
| Isocyanate part 4 | - | - | 1 | - | - |
| Isocyanate part 5 | - | - | - | 1 | - |

The adhesive compositions for food packaging films and samples for evaluation test were produced as follows.

The polyester polyols as polyol part were each converted together with the isocyanate parts to a laminating adhesive. A constant addition ratio NCO/OH was chosen.

The substrates to be coated were formatted to DIN A4 size. A PET/Aluminium carrier foil duplex was coated with 4 g/m² of the reactive adhesive mixture. The carrier film thus coated was then dried for 1 minutes at 90°C in a drying oven. Then the polyethylene film was pressed against the coated side. The composites produced in this way were cured under pressure (weighted 8 kg) between metal plates at 40°C in the drying oven.

The obtained adhesive compositions for food packaging films were evaluated by the following test procedures and the testing results are shown in Table 2.

### Initial tack

After the laminates were prepared and dried at 80 °C for 10 seconds, the initial tack of the adhesive was measured according to DIN 53357.

### Bonding strength after storage at 40 °C for 14 days

After the laminates were prepared and stored at 40°C for 14 days, the bonding strength of the adhesive was measured according to DIN 53357.

### Bonding strength after storage at 40 °C and sterilized with oleic acid

After the laminates were prepared and stored at 40 °C for 14 days, a pouch was made of the laminates and filled with a food simulant consisting of 0.1 g oleic acid, 100 g water and 9 g corn starch. The pouch was then sterilized for 45 min at 134°C. Immediately after sterilization process the bags were emptied and the bond strength of the adhesive was measured according to DIN 53357.

**Table 2. Testing results of initial tack and bonding strength (in N/15mm)**

| Items | Ex. 1 | Ex. 2 | CEx. 1 | CEx. 2 | CEx. 3 |
|---|---|---|---|---|---|
| Initial tack | 1.0 | 1.3 | 0.6 | 0.2 | 0.6 |
| Bonding strength after 14 days | 4.9 | 4.9 | 4.9 | - | - |
| Bonding strength after 14 days and sterilization with oleic acid solution | 10.4 | 11.0 | 8.3 | - | - |

As can be seen from Table 2, the inventive examples exhibited excellent initial tack and bonding strength for 14 days even after sterilization with oleic acid solution, while the comparative examples which does not contain the isocyanate terminated urethane prepolymer based on alicyclic polyol and non-aromatic polyisocyanate showed poorer initial tack and poorer bonding strength after sterilization with oleic acid. Therefore, the adhesive compositions in the inventive examples are suitable for highspeed lamination without causing telescoping issue due to the improved initial strength and are also suitable for food packaging application due to the resistance to the high temperature and oils.

## Claims

1. A two-part or multiple-part polyurethane adhesive composition comprising a polyol part and an isocyanate part, in which the isocyanate part comprises an alkoxysilane functionalized isocyanate compound and an isocyanate terminated urethane prepolymer being a reaction product of a reaction mixture comprising,
an isocyanate component comprising an aliphatic or alicyclic polyisocyanate (a), and
a polyol component comprising an alicyclic polyol.

2. The adhesive composition according to claim 1, wherein the aliphatic or alicyclic polyisocyanate is selected from 1,6-hexamethylene diisocyanate, isophorone diisocyanate, hydrogenated diphenylmethane diisocyanate, the adduct thereof, the oligomer thereof, and the mixture of above.

3. The adhesive composition according to claim 1 or 2, wherein the alicyclic polyol has one or more rings, preferably selected from 1,4-cyclohexanedimethanol, cyclobutanediol, cyclopentanediol, cyclohexanediol, cycloheptanediol, cyclooctanediol, cyclohexanedimethanol, tricyclo[5.2.1.0.2.6]decanedimethanol, bicyclo[4.3.0]-nonanediol, dicyclohexanediol, tricyclo[5.3.1.1]dodecanediol, bicyclo[4.3.0]nonanedimethanol, tricyclo[5.3.1.1]dodecanediethanol, spiro[3.4]octanediol, butylcyclohexanediol, 1,1'-bicyclohexylidenediol, cyclohexanetriol, hydrogenated bisphenol A, 1,3-adamantanediol, and combination thereof.

4. The adhesive composition according to any of claims 1 to 3, wherein the polyol component comprises at least 80% preferably at least 90%, and more preferably 100% by weight of an alicyclic polyol based on the weight of the polyol component.

5. The adhesive composition according to any of claims 1 to 4, wherein the polyol part comprises a polyol compound selected from a polyester polyol, a polyether polyol, a polycarbonate polyol, and combination thereof.

6. The adhesive composition according to any of claims 1 to 5, wherein the alkoxysilane functionalized isocyanate compound is a reaction product of a reaction mixture comprising of at least one aliphatic or alicyclic polyisocyanate (b) and at least one alkoxysilane.

7. The adhesive composition according to any of claims 1 to 6, wherein the isocyanate part further comprises an aliphatic or alicyclic polyisocyanate (c).

8. The adhesive composition according to any of claims 1 to 7, wherein the components in the reaction mixture of the isocyanate terminated urethane prepolymer has an NCO/OH value from 1.2 to 8, and preferably from 1.5 to 6.

9. The adhesive composition according to any of claims 1 to 8, wherein the isocyanate terminated urethane prepolymer has an NCO content from 1% to 20%, and preferably from 5% to 15%.

10. A cured adhesive obtainable by curing an adhesive composition according to any of claims 1 to 9.

11. The cured adhesive according to claim 10, having an initial tack of no less than 0.8 N/15mm, and preferably no less than 1 N/15mm according to DIN 53357.

12. The cured adhesive according to claim 10 or 11, having a bonding strength of no less than 3 N/15mm, and preferably no less than 4 N/15mm according to DIN 53357 after stored at 40°C for 14 days.

13. The cured adhesive according to any of claims 10 to 12, having a bonding strength of no less than 9 N/15mm, and preferably no less than 10 N/15mm according to DIN 53357 after stored at 40°C for 14 days and sterilized with oleic acid at 134°C for 45 min.

14. A flexible packaging material comprising a first layer comprised of a first polyolefin or first polyester; a second layer comprised of a second foil, a third layer comprised of a polyolefin which may be the same or different from the first polyolefin, a second polyester which may be the same as or different from the first polyester, or a metal foil; and cured adhesive of any of claims 10 to 13 bonding the second layer to the third layer.

15. A method of making a flexible film laminate, comprising:
combining the components of the two-part or multiple-part polyurethane adhesive composition according to claim 1 at a predetermined weight ratio to form an adhesive mixture,
disposing the adhesive mixture on at least a portion of one surface of a first flexible film,
joining the first flexible film and a second flexible film wherein the adhesive mixture is interposed between the first flexible film and the second flexible film; and
curing the adhesive mixture.
